(19) **Europäisches Patentamt**

**European Patent Office**

**Office européen des brevets**

(11) **EP 1 416 479 A2**

(12) **EUROPEAN PATENT APPLICATION**

(43) Date of publication:
06.05.2004 Bulletin 2004/19

(51) Int Cl.$^7$: **G11B 7/09**

(21) Application number: 03256743.0

(22) Date of filing: 24.10.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.10.2002 KR 2002066573**

(71) Applicant: **SAMSUNG ELECTRONICS CO., LTD. Suwon-City, Kyungki-do (KR)**

(72) Inventors:
• **Kim, Seok-jung 107-1502 Sangyong Apt. Suwon-si Gyeonggi-do (KR)**

• **Lee, Yong-hoon 702-1401 Salgugol 7-danji Paldal-gu Suwon-si Gyonggi-do (KR)**
• **Chung, Chong-sam 406-301 Shinyoungtong Hwaseong-gun Gyeonggi-do (KR)**
• **Kiim, Taek-kyung Youngdeungpo-gu Seoul (KR)**

(74) Representative: **Robinson, Ian Michael et al Appleyard Lees,**
**15 Clare Road**
**Halifax HX1 2HY (GB)**

(54) **Actuator for optical pickup, optical pickup apparatus, and optical recording/reproducing apparatus using the same**

(57) An actuator for an optical pickup includes a base (41), a holder (43) fixed to the base (41), a moving portion (45) on which an objective lens (71) for focusing incident light onto a disc and a liquid crystal panel for correcting spherical aberration are mounted, a magnetic driving portion (50) which drives the moving portion (45) in a radial direction and in a focusing direction relative to the disc, and a connection section (60) which includes a first connection part (61,62,67,68) which serves as an electrical connection path of a signal used to drive the magnetic driving portion (50) and has at least four wires, and a second connection part (63,64,65,66) electrically independent of the first connection part (61,62,67,68), which serves as an electrical connection path of a signal used to drive the liquid crystal panel, and has wires, and which supports the moving portion (45) to be movable with respect to the holder (43).

FIG. 3

## Description

The present invention relates to optical pickups, and more particularly, an actuator for an optical pickup, an optical pickup apparatus, and an optical recording/reproducing apparatus using the optical pickup apparatus, by which spherical aberration is corrected.

Generally, an optical pickup apparatus used in an optical recording/reproducing apparatus, such as a compact disc (CD) player, a CD-ROM drive, and a DVD-ROM drive, is moved in a radial direction with respect to an optical disc which is a recording medium, and records/reproduces information on/from the optical disc in a non-contact manner.

The optical pickup apparatus includes an objective lens which condenses light radiated from a light source and forms a light spot on the disc.

The objective lens is mounted on an actuator and is moved in tracking and focusing directions of the disc so as to form the light spot on the disc. That is, an actuator moves the objective lens to a desired position by electromechanical power generated by interaction between current applied to moving coils and permanent magnets.

A high-density recording/reproducing apparatus such as a HD-DVD player implements high density using a short wavelength laser light source and a high numerical aperture (NA) objective lens, and uses a large-capacity disc employing dual layers. However, in order to record/reproduce information on the dual layer disc, it is necessary to compensate for spherical aberration caused by a difference in the cover thickness of each layer.

Known spherical aberration compensation methods include using a beam expander, or using a liquid crystal panel in a moving portion of the actuator which can be moved with the objective lens as a single body. When using such a beam expander, the size of an optical pickup increases, and thus, it is substantially difficult to implement. Hence, a liquid crystal panel is more widely used. However, in the method using a liquid crystal panel, the liquid crystal panel is an active device, and thus, there is a need for an electrical connection path.

In order to solve these problems, a conventional actuator for an optical pickup having a liquid crystal panel in which a liquid crystal panel driving signal is obtained from an electrical signal by a demodulator electrically connected through four wires, may be used.

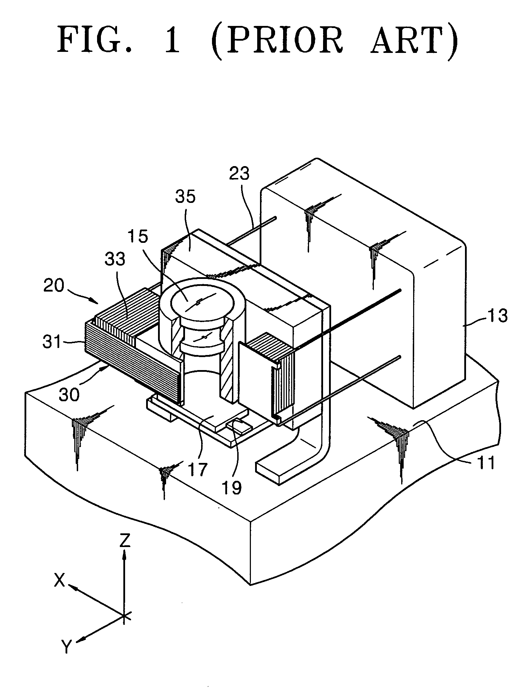

Referring to Figure 1, the conventional actuator for an optical pickup having a liquid crystal panel for spherical aberration correction includes a base 11, a holder 13 fixed to the base 11, a moving portion 20 on which an objective lens 15 and a liquid crystal panel 17 are mounted, a demodulator 19 mounted in the moving portion 20, four wires 23 which support the moving portion 20 and supply power, and a magnetic driving portion 30 which drives the moving portion 20 in the tracking and focusing directions.

The four wires 23 support the moving portion 20 so as to be movable in an X-direction and a Z-direction by magnetically driving the moving portion 20 when it is spaced apart from the base 11 by a predetermined gap. The magnetic driving portion 30 includes a focusing coil 31 and a tracking coil 33 which are installed in the moving portion 20 and perform driving in the X-direction and the Z-direction, respectively, and a magnet 35 which is installed in the base 11 opposite to the focusing coil 31 and the tracking coil 33.

The four wires 23 are used as an electrical connection path, and power used to drive the focusing coil 31 and the tracking coil 33 and power used to drive the liquid crystal panel 17 is supplied through the four wires 23.

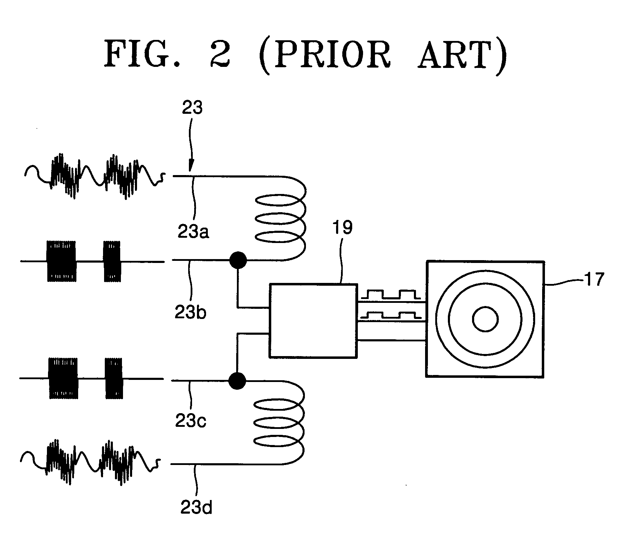

Thus, as shown in Figure 2, current for driving the focusing coil 31 and the tracking coil 33 and current for driving the liquid crystal panel 17 is applied to at least two wires 23a and 23d among the four wires 23, and the current for driving the liquid crystal panel 17 is separated from a driving current applied through the demodulator 19.

That is, when an existing current for driving the focusing coil 31 and an existing current for the tracking coil 33 are applied, two driving signals each having a typical frequency of 1 MHz have to be applied together, and the two driving signals are filtered by the demodulator 19, and a carrier signal at a frequency of 1 MHz is thereby removed such that two different signals used to drive the liquid crystal panel 17 are generated. Spherical aberration is corrected by changing the amplitudes of the two signals or by applying an amplitude of a tone-burst waveform.

The conventional actuator having the above structure utilizes a traditional actuator having four wires. However, by further including the demodulator, the number of assembling processes and costs increase.

Also, because the signal input/output from the demodulator and the signal used to drive the focusing and tracking coils 31 and 33 are connected through the same wires, cross-talk occurs between the signals, and thus the signals may be affected by each other.

The present invention aims to provide an actuator for an optical pickup and an optical recording/reproducing apparatus adopting the optical pickup apparatus, by which an electrical connection path of a liquid crystal panel for correcting spherical aberration is improved and simplified.

Additional aims and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

The present invention enables spherical aberration to be corrected by an active device having an electrical connection path which is independent of the electrical connection path of a driving coil. Further, stiffness of wires is optimised.

According to an aspect of the present invention, there is provided an actuator for an optical pickup including a base; a holder fixed to the base; a moving portion on which an objective lens for focusing incident light onto a disc and a liquid crystal panel for correcting spherical aberration are mounted; a magnetic driving portion which drives the moving portion in a radial direction and in a focusing direction relative to the disc; and a connection section which includes a first connection part which serves as an electrical connection path of a signal used to drive the magnetic driving portion and has at least four wires, and a second connection part that is installed to be electrically independent of the first connection part, which serves as an electrical connection path of a signal used to drive the liquid crystal panel, and has a plurality of wires, and which supports the moving portion to be movable with respect to the holder.

According to another aspect of the present invention, there is provided an optical pickup apparatus including an optical unit which includes a light source which radiates laser light onto a disc, an objective lens which focuses the laser light onto the disc, a photodetector which receives light reflected from the disc and detects an information signal and an error signal, and a liquid crystal panel which corrects spherical aberration, and which records/reproduces information on/from the disc; a base which is movable in a radial direction of the disc; a holder fixed to the base; a moving portion on which the objective lens and the liquid crystal panel are mounted; a magnetic driving portion which drives the moving portion in a radial direction and in a focusing direction relative to the disc; and a connection section which includes a first connection part which serves as an electrical connection path of a signal used to drive the magnetic driving portion and has at least four wires, and a second connection part that is installed to be electrically independent of the first connection part, which serves as an electrical connection path of a signal used to drive the liquid crystal panel, and has a plurality of wires, and which supports the moving portion to be movable with respect to the holder.

According to another aspect of the present invention, there is provided an optical recording/reproducing apparatus including a driving source which rotates a disc; an optical unit which includes a light source which radiates laser light onto a disc, an objective lens which focuses the laser light onto the disc, a photodetector which receives light reflected from the disc and detects an information signal and an error signal, and a liquid crystal panel which corrects spherical aberration, and which records/reproduces information on/from the disc; a base which is movable in a radial direction of the disc; a holder fixed to the base; a moving portion on which the objective lens and the liquid crystal panel are mounted; a magnetic driving portion which drives the moving portion in a radial direction and in a focusing direction relative to the disc; and a connection section which includes a first connection part which serves as an electrical connection path of a signal used to drive the magnetic driving portion and has at least four wires, and a second connection part that is installed to be electrically independent of the first connection part, which serves as an electrical connection path of a signal used to drive the liquid crystal panel, and has a plurality of wires, and which supports the moving portion to be movable with respect to the holder.

According to yet another aspect of the present invention, there is provided an actuator for an optical pickup, including: a holder mounted to a base; a moving portion on which a liquid crystal panel for correcting spherical aberration is mounted; a driving portion which drives the moving portion in a radial direction and in a focusing direction relative to the disc; and a connection section which movably supports the moving portion so as to be movable relative to the holder, includes a first electrical connection path for a signal used to drive the driving portion, and a second electrical connection path electrically independent of the first electrical connection part and for a signal used to drive the liquid crystal panel.

For a better understanding of the invention, and to show how embodiments of the same may be carried into effect, reference will now be made, by way of example, to the accompanying diagrammatic drawings in which:

Figure 1 is a partially cut-away perspective view illustrating a conventional actuator for an optical pickup having a liquid crystal panel for correcting spherical aberration;

Figure 2 is an internal circuit diagram of the actuator of Figure 1;

Figure 3 is a perspective view illustrating an embodiment of an actuator for an optical pickup according to an embodiment of the present invention;

Figure 4 is a perspective view illustrating the bottom side of a moving portion of the actuator of Figure 3;

Figure 5 illustrates an electrical connection path through wires of the actuator of Figure 3;

Figure 6 is a partial perspective view illustrating an embodiment of the present invention in which the wires are coupled with the moving portion of the actuator of Figure 3;

Figure 7 schematically illustrates an optical pickup apparatus according to an embodiment of the present invention; and

Figure 8 schematically illustrates an optical recording/reproducing apparatus adopting the actuator for an optical pickup and the optical pickup apparatus according to an embodiment of the present invention.

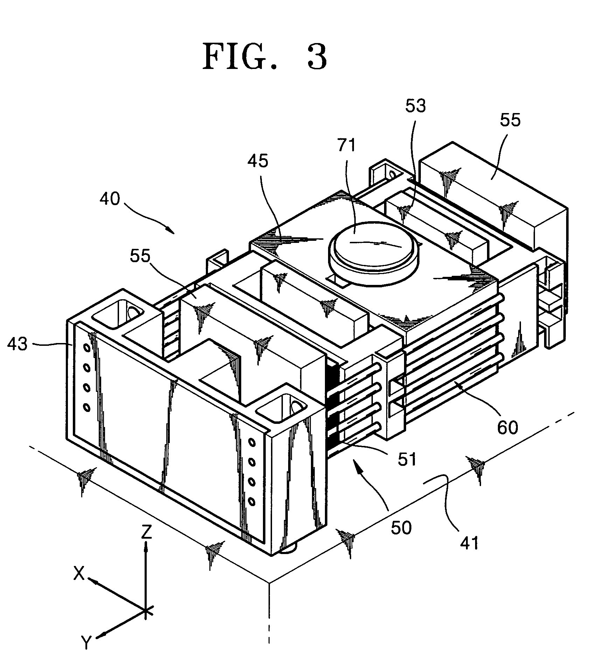

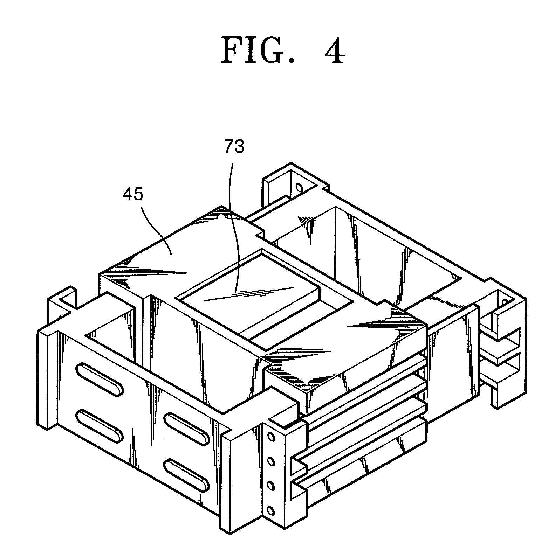

Referring to Figures 3 and 4, an actuator for an optical pickup according to an embodiment of the present invention includes a base 41, a holder 43 fixed on the base 41, a moving portion 45 which is installed to be movable in an X-direction and a Z-direction, a magnetic driving portion 50 which performs magnetic driving of the moving portion 45, and a connection section 60 which supports the moving portion 45 to be movable with respect to the holder 43 and is used as an electrical connection path.

An objective lens 71 which condenses incident light on a disc, which is a recording medium, and a liquid crystal panel 73 for correcting spherical aberration are mounted on the moving portion 45.

The magnetic driving portion 50 drives the moving portion 45 in a radial direction of the disc and in a focusing direction, that is, in the X-direction and the Z-direction, respectively. The magnetic driving portion 50 includes coils 51 which are installed in the moving portion 45 and magnets 53 and yoke members 55 which are installed in the base 41. Thus, the moving portion 45 is driven by an electromechanical power generated between the coils 51 and the magnets 53.

The connection section 60 movably supports the moving portion 45 and includes a first connection part that is used as an electrical connection path of a signal used to drive the magnetic driving portion 50, and a second connection part that is used as an electrical connection path of a signal used to drive the liquid crystal panel 73.

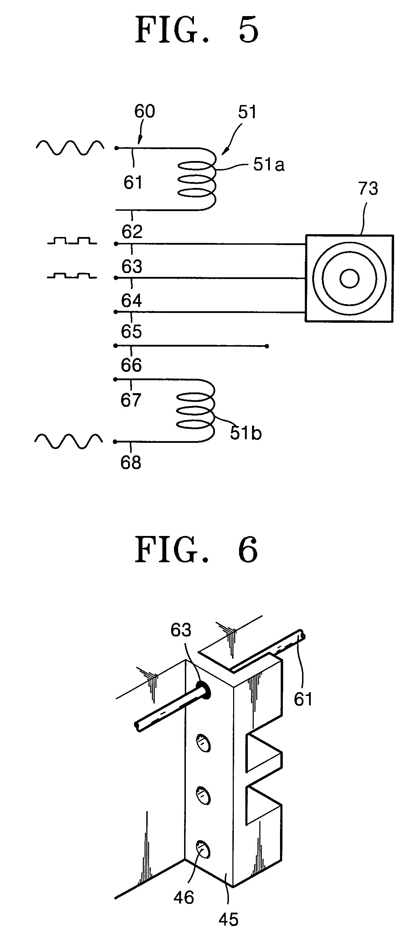

Referring to Figure 5, the first connection part includes four wires 61, 62, 67, and 68. Among them, the two wires 61 and 62 are used as an electrical connection path of a tracking coil 51a needed to drive the moving portion 45 in a X-direction, and the other two wires 67 and 68 are used as an electrical connection path of a focusing coil 51b needed to drive the moving portion 45 in a Z-direction. Although four wires are shown and described, it is to be understood that more than four wires may be used.

The second connection part is electrically independent of the first connection part and includes four wires 63, 64, 65, and 66. An electrical signal used to drive the liquid crystal panel 73 is transmitted through each of wires 63, 64, and 65. The other wire 66 supports the moving portion 45 symmetrically so that it does not roll and is not used as an electrical connection path. Although four wires are shown and described, it is to be understood that more than four wires may be used.

Further, when an optional tilting coil (not shown) is provided to control tilt of the moving portion 45, the wire 66 may be used as an electrical connection path of the tilting coil.

Figure 6 is a partial perspective view illustrating the wires coupled with the moving portion of the actuator of Figure 3. A case where one wire 61 of a plurality of wires is coupled with the moving portion 45 will be described below with reference to Figure 6.

A guide hole 46 which guides an assembly location of the wire 61, is formed at locations in the holder 43 (shown in Figure 3) with which the wire 61 is coupled to the moving portion 45. The diameter of the guide hole 46 is formed to be larger than the diameter of the wire 61. The wire 61 is inserted into the guide hole 46 and fixed using a hardener 63. The hardener 63 is provided into the guide hole 46 in a viscous liquid state. After the wire 61 is placed in a correct coupling location, the hardener 63 is hardened by ultraviolet rays.

By fixing the wire 61 using the guide hole 46 and the hardener 63 in this way, the effective length of the wire 61 can be more easily adjusted than in a case where the wire 61 is fixed by a traditional method such as soldering. In addition, the moving portion 45 can be easily arranged to keep its balance such that rolling of the moving portion 45 can be reduced.

When the connection section 60 (shown in Figure 5) is formed of eight or more wires, if the effective length and diameter of the wires are maintained to be the same as in a conventional structure in which four wires are used, overall stiffness increases. As such, it is difficult to control the moving portion 45 in a tracking direction and a focusing direction.

A value indicating stiffness k of the wire may be obtained by Equation 1.

$$k = \frac{3 \times n \times \pi \times E \times d^4}{4 \times l^3} \qquad (1)$$

Here, **n** is the number of wires, **E** is an elastic coefficient of a wire, **d** is the diameter of the wire, and **l** is the effective length of the wire. Thus, when the number of wires increases from four (in a traditional case) to eight or more wires, the diameter **d** of the wire is reduced, or the length of the wire is increased by **l** such that overall stiffness **k** of the wire can be optimized.

In consideration of this, each of the plurality of wires forming the first and second connection parts has an effective length between 7 and 13 mm (more preferably, 9.6 mm) and a diameter of $0.10 \pm 0.03$ mm.

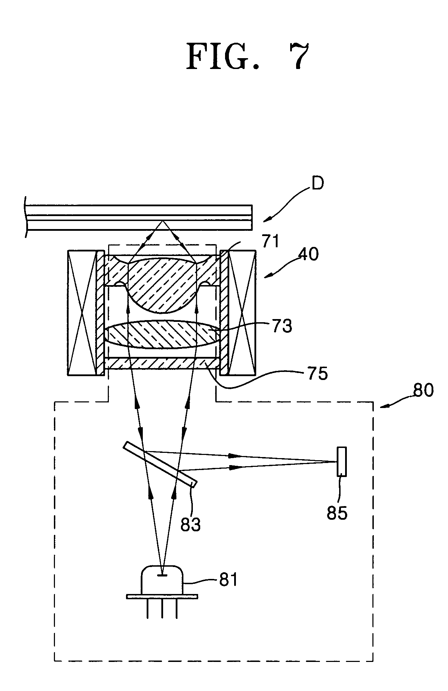

Referring to Figure 7, an optical pickup apparatus according to an embodiment of the present invention includes an optical unit 80 which records/reproduces information on/from a disc D, and an actuator 40 which controls the optical unit 80 in tracking and focusing directions. The optical unit 80 includes a light source 81 which radiates laser light through an objective lens 71 which condenses the laser light onto the disc D, a photodetector 85 which receives light reflected from the disc D and detects an information signal and an error signal, and a liquid crystal panel 75 which is placed on an optical path for correcting spherical aberration. The objective lens 71 and the liquid crystal panel 75 are mounted in a moving portion 45 (shown in Figure 3) of the actuator 40 and are moved when a tracking error and a focusing error are corrected. In addition, the optical unit 80 includes a beam splitter 83 on the optical path between the light source 81 and the objective lens 71 which changes the path of incident light so that effective light radiated from the light source 81 travels toward the disc D and effective light reflected from the disc D travels toward the photodetector 85. The optical unit 80 further includes a collimating lens 73 which condenses light transmitted from the light source 81 to the objective lens 71 into a parallel beam.

The actuator 40 controls the objective lens 71 in focusing and tracking directions in response to an error signal detected by the photodetector 85. The actuator 40 is the same as described with reference to Figures 3 through 6, and thus, further description thereof will be omitted.

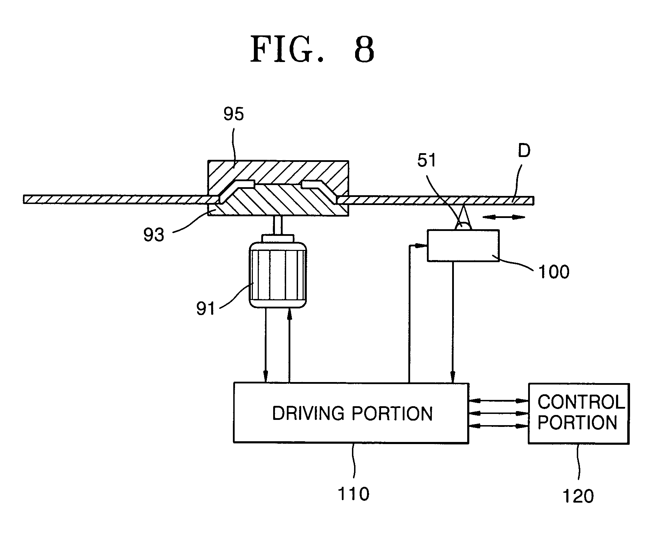

Figure 8 schematically illustrates an optical recording/reproducing apparatus using the actuator for an optical pickup and the optical pickup apparatus according to the aforesaid embodiment of the present invention. Referring to Figure 8, the optical recording/reproducing apparatus includes a turntable 93 on which an optical recording medium D having a circular shape is seated, a clamp 95 which fixes the optical recording medium D seated on the turntable 93, a spindle motor 91 which rotates the optical recording medium D, an optical pickup 100 which is installed to be movable in a radial direction of the optical recording medium D and records/reproduces information on/from the optical recording medium D, a driving portion 110 which drives the spindle motor 91 and the optical pickup 100, and a control portion 120 which controls focusing and tracking servos of the optical pickup 100.

The optical pickup 100 includes an optical unit having an objective lens 51 and an actuator which drives the objective lens 51 in focusing and tracking directions. The structures and operations of the optical pickup apparatus and the actuator are the same as described previously with reference to Figure 8, and thus, detailed descriptions thereof will be omitted.

The operation of the optical recording/reproducing apparatus having the above structure will be described in detail below. A signal that is detected by the optical pickup 100 and is photoelectrically transduced is input to the control portion 120 through the driving portion 110. The driving portion 110 controls a rotation speed of the spindle motor 91 and drives the optical pickup 100. The control portion 120 transmits focusing and tracking servo commands based on the signal input from the driving portion 110 to the driving portion 110 and performs focusing servo and tracking servo control.

As described above, in the actuator for an optical pickup, the optical pickup apparatus, and the optical recording/reproducing apparatus using the optical pickup apparatus, an electrical connection path of a liquid crystal path for correcting spherical aberration is separated from an electrical connection path of a driving coil, and thus, chip parts such as a demodulator are not needed. As such, a conductive wire coming from the liquid crystal panel is connected directly to an external circuit through a connection portion, current applied to the driving coil and current applied to the liquid crystal panel are separated from each other, and cross-talk between two applied signals does not occur.

In addition, when eight or more connection portions are arranged, the diameters and lengths of the wires used as the connection portions are adjusted using Equation 1 to determine stiffness of the wires such that DC sensitivity can be increased and rolling of the actuator can be reduced. Also, a guide hole is provided in a portion with which the wires are coupled, and assembly locations of the wires are guided by the guide hole such that assembly precision of the wires can be improved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, 1 unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An actuator for an optical pickup, comprising:

a base (41);

a holder (43) fixed to the base (41);

a moving portion (45) on which an objective lens (71) for focusing incident light onto a disc and a liquid crystal panel (73) for correcting spherical aberration are mounted;

a magnetic driving portion (50) which drives the moving portion (45) in a radial direction and in a focusing direction relative to the disc; and

a connection section (60) which includes a first connection part (61,62,67,68) which serves as an electrical connection path of a signal used to drive the magnetic driving portion (50) and has at least four wires, and a second connection part (63,64,65,66) electrically independent of the first connection part (61,62,67,68), which serves as an electrical connection path of a signal used to drive the liquid crystal panel, and has a plurality of wires, and which supports the moving portion (45) to be movable with respect to the holder (43).

2. The actuator of claim 1, wherein the second connection part (63,64,65,66) comprises four or more wires, and the electrical signal used to drive the liquid crystal panel is transmitted through each of at least three of the four or more wires (63,64,65).

3. The actuator of claim 1 or 2, wherein the second connection part (63,64,65,66) comprises four or more wires and at least one of the wires (66) symmetrically supports the moving portion (45) so as to prevent rolling thereof.

4. The actuator of claim 1, 2 or 3, comprising a tilting coil which controls a tilt of the moving portion (45), and an electrical signal which is used to drive the tilting coil is transmitted through at least one wire (66) of the second connection part (63,64,65,66).

5. The actuator as claimed in any of claim 1 through 4, wherein each of the wires (61-68) has an effective length of between 7 and 13 mm and a diameter of 0.10 ± 0.03 mm.

6. The actuator of claim 5, wherein each of the wires (61-68) has an effective length of about 9.6 mm.

7. The actuator as claimed in any of claim 1 through 6, wherein guide holes (46) which guide assembly locations of the wires (61-68) are formed in the holder (43), and the wires (61-68) are coupled to the guide holes (46) by a fixer (63).

8. The actuator of claim 7, wherein the fixer (63) is a hardener which is hardened by ultraviolet rays, and wherein, when the wires (61-68) are coupled to the guide holes (46) by the fixer (63), the moving portion (45) is more easily balanced so that rolling thereof is reduced.

9. An optical pickup apparatus comprising:

an optical unit which includes a light source which radiates laser light onto a disc, an objective lens (71) which focuses the laser light onto the disc, a photodetector which receives light reflected from the disc and detects an information signal and an error signal, and a liquid crystal panel which corrects spherical aberration, and which records/reproduces information on/from the disc;

a base (41) which is movable in a radial direction of the disc;

a holder (43) fixed to the base (41);

a moving portion (45) on which the objective lens (71) and the liquid crystal panel are mounted;

a magnetic driving portion (50) which drives the moving portion (45) in the radial direction and in a focusing direction relative to the disc; and

a connection section (60) which includes a first connection part (61,62,67,68) which serves as an electrical connection path of a signal used to drive the magnetic driving portion (50) and has at least four wires, and a second connection part (63,64,65,66) electrically independent of the first connection part (61,62,67,68), which serves as an electrical connection path of a signal used to drive the liquid crystal panel, and has a plurality of wires, and which supports the moving portion (45) to be movable with respect to the holder (43).

10. The apparatus of claim 9, wherein the plurality of wires is four or more wires, and the electrical signal used to drive the liquid crystal panel is transmitted through each of at least three of the four or more wires (63,64,65).

11. The apparatus of claim 9, wherein the plurality of wires is four wires, and the electrical signal used to drive the liquid crystal panel is transmitted through each of three of the four wires, and the other of the four wires (66) symmetrically supports the moving portion (45) so as to prevent rolling thereof.

**12.** The apparatus of claim 9, further comprising a tilting coil which controls a tilt of the moving portion (45), wherein the plurality of wires is four or more wires, and an electrical signal which is used to drive the tilting coil is transmitted through the other of the four or more wires.

**13.** The apparatus as claimed in any of claim 9 through 12, wherein each of the wires (61-68) has an effective length of between 7 and 13 mm and a diameter of $0.10 \pm 0.03$ mm.

**14.** The apparatus of claim 13, wherein each of the wires (61-68) has an effective length of about 9.6 mm.

**15.** The apparatus as claimed in any of claim 9 through 14, wherein guide holes (46) which guide assembly locations of the wires (61-68) are formed in the holder (43), and the wires (61-68) are coupled to the guide holes (46) by a fixer (63).

**16.** The actuator of claim 15, wherein the fixer (63) is a hardener which is hardened by ultraviolet rays, and wherein, when the wires (61-68) are coupled to the guide holes (46) by the fixer (63), the moving portion (45) may be more easily balanced so that rolling thereof is reduced.

**17.** An optical recording/reproducing apparatus comprising:

a driving source which rotates a disc;

an optical unit which includes a light source which radiates laser light onto a disc, an objective lens (71) which focuses the laser light onto the disc, a photodetector which receives light reflected from the disc and detects an information signal and an error signal, and a liquid crystal panel which corrects spherical aberration, and which records and/of reproduces information on and/or from the disc;

a base (41) which is movable in a radial direction of the disc;

a holder (43) fixed to the base (41);

a moving portion (45) on which the objective lens (71) and the liquid crystal panel are mounted;

a magnetic driving portion (50) which drives the moving portion (45) in the radial direction and in a focusing direction relative to the disc; and

a connection which includes a first connection part (61,62,67,68) which serves as an electrical connection path of a signal used to drive the magnetic driving portion (50) and has at least four wires, and a second connection electrically independent of the first connection part (61,62,67,68), which serves as an electrical connection path of a signal used to drive the liquid crystal panel, and has a plurality of wires, and which supports the moving portion (45) to be movable with respect to the holder (43).

**18.** The apparatus of claim 17, wherein the plurality of wires is four or more wires, and the electrical signal used to drive the liquid crystal panel is transmitted through each of at least three of the four or more wires (63,64,65).

**19.** The apparatus of claim 17, wherein the plurality of wires is four, and the electrical signal used to drive the liquid crystal panel is transmitted through each of three of the four wires, and wherein the fourth wire symmetrically supports the moving portion (45) so as to prevent rolling thereof.

**20.** The apparatus of claim 17, further comprising a tilting coil which controls a tilt of the moving portion (45), wherein the plurality of wires is four or more wires, and the electrical signal which is used to drive the liquid crystal panel is transmitted through each of the four or more wires.

**21.** The apparatus as claimed in any of claim 17 through 20, wherein each of the wires has an effective length of between 7 and 13 mm and a diameter of $0.10 \pm 0.03$ mm.

**22.** The apparatus of claim 21, wherein each of the wires has an effective length of about 9.6 mm.

**23.** The apparatus as claimed in any of claim 17 through 22, wherein guide holes (46) guide assembly locations of the wires are formed in the holder (43), and the wires (61-68) are coupled with the guide holes (46) by a fixer (63).

**24.** The apparatus of claim 23, wherein the fixer (63) is a hardener which is hardened by ultraviolet rays, and wherein, when the wires (61-68) are coupled to the guide holes (46) by the fixer (63), the moving portion (45) is more easily balanced so that rolling thereof is reduced.

# FIG. 1 (PRIOR ART)

# FIG. 2 (PRIOR ART)

# FIG. 3

# FIG. 4

# FIG. 5

# FIG. 6

# FIG. 7

# FIG. 8